# EUROPÄISCHE PATENTSCHRIFT

(11) **EP 3 265 347 B1**
(45) Veröffentlichungstag und Bekanntmachung des Hinweises auf die Patenterteilung: **21.10.2020**
(21) Anmeldenummer: 16708378.1
(22) Anmeldetag: 01.03.2016
(51) Int. Cl.: B60T 8/1761, B60T 8/1755, B60T 8/88

(54) **VERFAHREN ZUM BETRIEB EINER BREMSANLAGE FÜR KRAFTFAHRZEUGE UND BREMSANLAGE**
METHOD FOR OPERATING A BRAKE SYSTEM FOR MOTOR VEHICLES, AND A BRAKE SYSTEM
PROCÉDÉ PERMETTANT DE FAIRE FONCTIONNER UN SYSTÈME DE FREIN POUR VÉHICULES AUTOMOBILES ET SYSTÈME DE FREIN

(30) Priorität: 03.03.2015 DE 102015203716; 26.02.2016 DE 102016203093
(43) Veröffentlichungstag der Anmeldung: 10.01.2018
(73) Patentinhaber: Continental Teves AG & Co. OHG, 60488 Frankfurt am Main (DE)
(72) Erfinder: BESIER, Marco, 65307 Bad Schwalbach (DE); ROLL, Georg, 60438 Frankfurt (DE); DRUMM, Stefan, 55291 Saulheim (DE); LINHOFF, Paul, 61267 Neu-Anspach (DE)
(86) Internationale Anmeldenummer: PCT/EP2016/054267
(87) Internationale Veröffentlichungsnummer: WO 2016/139185

(56) Entgegenhaltungen:
- DE-A1-102011 076 980
- US-A- 5 139 315
- US-A1- 2002 027 386

## Beschreibung

Die Erfindung betrifft ein Verfahren zum Betrieb einer Bremsanlage gemäß dem Oberbegriff von Anspruch 1 sowie eine Bremsanlage gemäß dem Oberbegriff von Anspruch 11.

Es sind Kraftfahrzeuge bekannt, die eine hydraulische Betriebsbremsanlage für Vorder- und Hinterachse und eine mittels eines EPB-Bedientasters durch den Fahrer aktivierbare Parkbremsanlage mit elektromechanischen Parkbremsen (EPB) an den Rädern der Hinterachse umfassen. Auch ist eine Notfallbremsfunktion in derartigen Bremsanalgen bekannt, die bewirkt dass, wenn während der Fahrt der EPB-Bedientaster vom Fahrer aktiviert wird, eine hydraulische Bremsung mittels der Betriebsbremsanlage ausgelöst wird, um das Fahrzeug mit einer voreingestellten Verzögerung zu bremsen. Diese Funktion ist auch als dynamische Bremsfunktion (DBF) bekannt. Ist die (hydraulische) dynamische Bremsfunktion (DBF) nicht verfügbar, kann als Rückfallebene die Aktuator dynamische Bremsfunktion (ADBF) genutzt werden, bei welcher die elektrischen Parkbremsen (EPBs) an der Hinterachse für eine Bremsung während der Fahrt genutzt werden. Bei diesem bekannten Betriebsverfahren rollt die Vorderachse frei, d.h. ist ungebremst, und die Hinterachse wird mit den elektrischen Parkbremsen gebremst. Die bekannte ADBF wird vom Fahrer durch Betätigung des EPB-Bedientasters lediglich digital aktiviert oder deaktiviert, d.h. dass eine analog dosierbare Bereitstellung der Zuspannkräfte nicht vorgesehen ist. Bei einem entsprechenden Bedienkommando werden die elektrischen Antriebe der elektromechanischen Parkbremsen so lange in Zuspannrichtung bestromt, bis eine Blockierneigung der EPB-gebremsten Räder zu erkennen ist. Dann wird die Bestromung so lange umgekehrt, bis die Blockiertendenz nicht mehr besteht, um danach wieder zuzuspannen und diesen Vorgang zyklisch zu wiederholen. Somit werden die Hinterräder mittels der elektrischen Parkbremsen an ihrer Stabilitätsgrenze, d.h. mit der maximal erzielbaren Verzögerungswirkung, gebremst. Dieses Verfahren basiert demnach auf Regelalgorithmen, die auf den Schlupf der EPB-gebremsten Räder reagieren. Dabei wird der Schlupf dadurch bestimmt, dass die aktuelle Raddrehzahl mit einer Referenzdrehzahl verglichen wird, die proportional zur Fahrzeuggeschwindigkeit ist (sog. (Fahrzeug)Referenzgeschwindigkeit). Die bekannte ADBF nutzt zur Bildung der Fahrzeugreferenzgeschwindigkeit nur die Raddrehzahlinformationen der Vorderräder, da diese während des Abbremsens mit ADBF frei rollen und somit selbst keinen Schlupf aufweisen.

Um die bei einem Bremsvorgang des Fahrzeugs auftretenden Nickbewegungen des Fahrzeugaufbaus kurz vor Stillstand des Fahrzeugs zu verringern, wird in der DE 10 2011 076 980 A1 vorgeschlagen, bei geringen Fahrzeuggeschwindigkeiten bis etwa 13 km/h die an einer Hinterachse des Kraftfahrzeugs wirksame elektrische Feststellbremse zu betätigen, während die Betriebsbremse einen Bremsvorgang ausführt.

Es ist Aufgabe der vorliegenden Erfindung, ein Verfahren zum Betrieb einer eingangs genannten Bremsanlage für Kraftfahrzeuge sowie eine derartige Bremsanlage bereitzustellen, welches/welche die Sicherheit bei Bremsungen des Kraftfahrzeugs erhöht, insbesondere in Fällen in welchen die hydraulische Betriebsbremsvorrichtung teilweise ausgefallen ist oder nur in einer, z.B. unverstärkten, hydraulischen Rückfallebenenbetriebsart betrieben werden kann.

Eine weitere Aufgabe der vorliegenden Erfindung ist es, ein Verfahren zum Betrieb einer Bremsanlage sowie eine Bremsanlage bereitzustellen, welches zu einer verbesserten Bremswirkung führt und dabei insbesondere die Fahrzeugstabilität erhält.

Die Aufgabe wird erfindungsgemäß durch ein Verfahren gemäß Anspruch 1 und eine Bremsanlage gemäß Anspruch 11 gelöst.

Die Erfindung geht von einer Bremsanlage eines Kraftfahrzeugs mit einer hydraulischen Betriebsbremsvorrichtung mit hydraulisch betätigbaren Radbremsen an zumindest einer Vorderachse des Kraftfahrzeugs, einer Parkbremsvorrichtung mit jeweils durch einen elektromechanischen Aktuator betätigbaren Radbremsen an einer Hinterachse des Kraftfahrzeugs und Raddrehzahlsensoren an den Rädern der Vorder- und Hinterachse aus. Der Erfindung liegt der Gedanke zugrunde, dass während einer Bremsung mittels der hydraulischen Betriebsbremsvorrichtung während einer Fahrt des Kraftfahrzeugs, eine Bremsung mittels der Parkbremsvorrichtung durchgeführt wird. Es wird also während einer Fahrt zeitlich parallel zu einer Bremsung an zumindest den Rädern der Vorderachse mittels der hydraulischen Betriebsbremsvorrichtung, eine Bremsung mittels der Parkbremsvorrichtung an den Rädern der Hinterachse durchgeführt. So wird eine verbesserte Bremswirkung erzielt, wobei das Fahrzeug stabil bleibt.

Bevorzugt wird das erfindungsgemäße Verfahren während des automatisierten Fahrens durchgeführt.

Bevorzugt wird das erfindungsgemäße Verfahren durchgeführt, wenn eine Bremsung mittels eines Primärbremssystems der hydraulischen Betriebsbremsvorrichtung nicht möglich ist, und die Bremsung mittels eines Sekundärbremssystems der hydraulischen Betriebsbremsvorrichtung an zumindest der Vorderachse durchgeführt wird. Besonders bevorzugt umfasst das Primärbremssystem der hydraulischen Betriebsbremsvorrichtung eine elektrisch ansteuerbare, erste Druckbereitstellungseinrichtung, mit welcher die hydraulisch betätigbaren Radbremsen der Vorder- und Hinterachse betätigbar sind. Besonders bevorzugt umfasst das Sekundärbremssystem der hydraulischen Betriebsbremsvorrichtung eine elektrisch ansteuerbare, zweite Druckbereitstellungseinrichtung, mit welcher zumindest die hydraulisch betätigbaren Radbremsen der Vorderachse betätigbar sind.

Die Bremsung mittels der Parkbremsvorrichtung wird basierend auf einer Auswertung oder einem Vergleich der Raddrehzahlinformationen der seitengleichen Räder der Vorderachse und der Hinterachse durchgeführt. So kann die Bremswirkung an der Vorderachse für die Bremsung mittels der Parkbremsvorrichtung an der Hinterachse adäquat berücksichtigt werden.

Bevorzugt werden zur Bremsung eines der Räder der Hinterachse mittels der Parkbremsvorrichtung die Raddrehzahlinformationen dieses Rades (der Hinterachse) und des seitenweise zugehörigen (d.h. seitengleichen) Rades der Vorderachse herangezogen bzw. ausgewertet. Vorteilhafterweise wird jedes Rad der Hinterachse derartig mittels der Parkbremsvorrichtung gebremst. Besonders bevorzugt wird zur Bremsung eines der Räder der Hinterachse mittels der Parkbremsvorrichtung ausschließlich die Raddrehzahlinformationen dieses Rades (der Hinterachse) und des seitenweise zugehörigen Rades der Vorderachse herangezogen bzw. ausgewertet, wenn keine Antiblockierregelung an der Vorderachse vorliegt.

Gemäß einer bevorzugten Ausführungsform der Erfindung wird die Parkbremsvorrichtung derart angesteuert oder geregelt, dass der Schlupf zumindest eines der Räder der Hinterachse im wesentlichen proportional zu dem Schlupf des seitenweise zugehörigen Rad der Vorderachse eingestellt wird. Vorteilhafterweise wird jedes Rad der Hinterachse derartig mittels der Parkbremsvorrichtung gebremst. Die Parkbremsvorrichtung wird besonders bevorzugt derart angesteuert oder geregelt, wenn keine Antiblockierregelung an der Vorderachse vorliegt.

Bevorzugt wird die Parkbremsvorrichtung derart angesteuert oder geregelt, dass sich die Räder der Hinterachse im wesentlichen entsprechend den Rädern der Vorderachse im Schlupf befinden, und/oder dass sich jedes Rad der Hinterachse im wesentlichen entsprechend dem seitenweise zugehörigen Rad der Vorderachse im Schlupf befindet. Die Parkbremsvorrichtung wird besonders bevorzugt derart angesteuert oder geregelt, wenn keine Antiblockierregelung an der Vorderachse vorliegt.

Gemäß einer bevorzugten Ausführungsform der Erfindung wird die Parkbremsvorrichtung derart angesteuert oder geregelt, dass zumindest die Raddrehzahl eines der Räder der Hinterachse im wesentlichen proportional zu der des seitenweise zugehörigen Rades der Vorderachse gehalten wird. Vorteilhafterweise wird jedes Rad der Hinterachse derartig mittels der Parkbremsvorrichtung gebremst. Die Parkbremsvorrichtung wird besonders bevorzugt derart angesteuert oder geregelt, wenn keine Antiblockierregelung an der Vorderachse vorliegt. Durch die Regelung der Raddrehzahl eines Hinterrads auf einen zum Vorderrad proportionalen Wert wird erreicht, dass auch die Schlüpfe von Vorder- und Hinterrad proportional sind. Dies hat die erwünschte Wirkung, dass so lange das Vorderrad nicht blockiert, auch das Hinterrad nicht blockieren kann.

Gemäß einer bevorzugten Ausführungsform der Erfindung wird die Parkbremsvorrichtung derart angesteuert oder geregelt, dass die Radgeschwindigkeit zumindest eines der Räder der Hinterachse mit der Radgeschwindigkeit des seitenweise zugehörigen Rades der Vorderachse mitgeführt wird. So wird eine oszillierende, im zeitlichen Mittel jedoch analoge und stufenlose Erzeugung einer Hinterradbremskraft proportional zum seitengleichen Vorderrad erreicht. Vorteilhafterweise wird jedes Rad der Hinterachse derartig mittels der Parkbremsvorrichtung gebremst. Die Parkbremsvorrichtung wird besonders bevorzugt derart angesteuert oder geregelt, wenn keine Antiblockierregelung an der Vorderachse vorliegt. Diese Ausführungsform bietet den Vorteil, dass das Verfahren mit an sich bekannten elektrischen Parkbremsen bzw. elektromechanischen Aktuatoren einer Parkbremsvorrichtung, welche üblicherweise keine Sensorik (wie Kraft-, Weg- oder Winkelsensoren) aufweisen, durchführbar ist, da die Ansteuerung der Parkbremsvorrichtung anhand der Raddrehzahlinformationen der seitenweise zusammengehörenden Räder durchgeführt wird.

Bevorzugt wird die Parkbremsvorrichtung derart angesteuert oder geregelt, dass die Radgeschwindigkeit zumindest eines der Räder der Hinterachse innerhalb eines vorgegebenen Geschwindigkeitsbereichs mit der Radgeschwindigkeit des seitenweise zugehörigen Rades der Vorderachse mitgeführt wird. Vorteilhafterweise wird jedes Rad der Hinterachse derartig mittels der Parkbremsvorrichtung gebremst. Die Parkbremsvorrichtung wird besonders bevorzugt derart angesteuert oder geregelt, wenn keine Antiblockierregelung an der Vorderachse vorliegt.

Bevorzugt liegt der vorgegebene Geschwindigkeitsbereich mit einer vorgegebenen Breite um die Radgeschwindigkeit des entsprechenden Vorderrades. Die vorgegebene Breite beträgt vorteilhafterweise ungefähr plus 0,5 km/h und minus 0,5 km/h um die Radgeschwindigkeit des seitengleichen Vorderrades.

Bevorzugt wird für zumindest eines der Räder der Hinterachse eine Soll-Radgeschwindigkeit vorgegeben und dann eingestellt, welche gleich einer gemessenen Radgeschwindigkeit des seitenweise zugehörigen Rades der Vorderachse abzüglich eines Soll-Schlupfwertes ist. Besonders bevorzugt wird für jedes Rad der Hinterachse eine entsprechende Soll-Radgeschwindigkeit vorgegeben. Dabei ist der Soll-Schlupfwert hinterradindividuell.

Bevorzugt wird der Soll-Schlupfwert gleich einem Ist-Schlupfwert des seitengleichen Vorderrads multipliziert mit einem vorgegebenen Skalierungsfaktor gewählt.

Da die entsprechende Einstellung der Radgeschwindigkeit des Hinterrades ggf. etwas Zeit benötigt, wird die Radgeschwindigkeit des Hinterrades zumindest nach einem Anpassungs-Zeitintervall mit der Radgeschwindigkeit des seitenweise zugehörigen Vorderrades mitgeführt.

Unter dem "seitenweise zugehörigen Rad der Vorderachse" wird das seitengleiche Rad der Vorderachse verstanden. D.h. z.B. für das rechte Hinterrad ist das rechte Vorderrad das seitenweise zugehörige Rad der Vorderachse.

Die oben ausgeführte seitenweise Auswertung von Hinterrad und Vorderrad, insbesondere die Mitführung der Hinterrad-Radgeschwindigkeit mit der Radgeschwindigkeit des seitengleichen Vorderrades, besitzt gegenüber der Verwendung einer für beide Seiten gleichen Soll-Radgeschwindigkeit für die Hinterräder den Vorteil, dass die bei Kurvenfahrt auch bei Längsschlupf Null auftretenden unterschiedlichen Raddrehzahlen ausreichend berücksichtigt werden. Eine exakte Bestimmung der beiden Hinterachs-Soll-Raddrehzahlen aus den beiden Raddrehzahlen der frei rollenden Räder der Vorderachse ist in EP 1153814 A1 beschrieben. Für das bevorzugte Regelkonzept des Einstellens des Schlupfs des hinteren Rades, so dass er mit dem Schlupf des Vorderrades der gleichen Fahrzeugseite übereinstimmt, könnte man die dort dargelegten Abhängigkeiten der Raddrehzahlen aller Fahrzeugräder bei Kurvenfahrt ebenfalls nutzen. Aber wie sich nun gezeigt hat, ist es für die bevorzugte Ausführungsform des erfindungsgemäßen Verfahrens ausreichend, die Raddrehzahlen an der Hinterachse seitenweise an die der Vorderachse anzugleichen.

Gemäß einer bevorzugten Ausführungsform der Erfindung wird die Bremsung zumindest eines der Räder der Hinterachse mittels der Parkbremsvorrichtung anhand einer Fahrzeugreferenzgeschwindigkeit durchgeführt, welche aus den Raddrehzahlinformationen aller Räder von Vorder- und Hinterachse bestimmt wird, wenn eine Antiblockierregelung an der Vorderachse vorliegt. So gehen die während der Antiblockierregelung an der Vorderachse auftretenden starken Schwankungen der Vorderraddrehzahlen weniger in die Regelung der Parkbremsvorrichtung ein. Vorteilhafterweise wird jedes Rad der Hinterachse derartig mittels der Parkbremsvorrichtung gebremst. Besonders bevorzugt wird diese Art der Bremsung des Hinterrades mittels der Parkbremsvorrichtung anhand der Fahrzeugreferenzgeschwindigkeit ausschließlich dann durchgeführt, wenn eine Antiblockierregelung an der Vorderachse vorliegt.

Bevorzugt werden im Falle einer Antiblockierregelung an der Vorderachse die Schlupfschwellen für eine Antiblockierregelung an der Hinterachse auf einen positiven Wert anteilig zur Fahrzeugreferenzgeschwindigkeit gesetzt. Besonders bevorzugt werden die Schlupfschwellen auf einen Wert von ca. 3% bis 6% der Fahrzeugreferenzgeschwindigkeit gesetzt.

Gemäß einer bevorzugten Ausführungsform des erfindungsgemäßen Verfahrens wird eine im zeitlichen Mittel analoge und stufenlose Bremskrafterzeugung an der Hinterachse mit Hilfe der elektrischen Parkbremsaktuatoren durchgeführt.

Die Erfindung betrifft auch eine Bremsanlage für ein Kraftfahrzeug mit einer hydraulischen Betriebsbremsvorrichtung mit hydraulisch betätigbaren Radbremsen an zumindest einer Vorderachse, einer Parkbremsvorrichtung mit jeweils durch einen elektromechanischen Aktuator betätigbaren Radbremsen an einer Hinterachse, Raddrehzahlsensoren an den Rädern der Vorder- und Hinterachse und einer elektronischen Steuer- und Regeleinheit, wobei in der elektronischen Steuer- und Regeleinheit ein erfindungsgemäßes Verfahren durchgeführt wird.

Bevorzugt handelt es sich um eine Bremsanlage, die in einer "Brake-by-wire"-Betriebsart sowohl vom Fahrzeugführer als auch unabhängig vom Fahrzeugführer ansteuerbar ist, und in einer hydraulischen Rückfallbetriebsart nur vom Fahrzeugführer betrieben werden kann.

Bevorzugt umfasst die hydraulische Betriebsbremsvorrichtung der Bremsanlage ein Primärbremssystem und ein Sekundärbremssystem. Besonders bevorzugt umfasst das Primärbremssystem der hydraulischen Betriebsbremsvorrichtung eine elektrisch ansteuerbare, erste Druckbereitstellungseinrichtung, mit welcher die hydraulisch betätigbaren Radbremsen der Vorder- und Hinterachse betätigbar sind. Besonders bevorzugt umfasst das Sekundärbremssystem der hydraulischen Betriebsbremsvorrichtung eine elektrisch ansteuerbare, zweite Druckbereitstellungseinrichtung, mit welcher zumindest die hydraulisch betätigbaren Radbremsen der Vorderachse betätigbar sind.

Weitere bevorzugte Ausführungsformen der Erfindung ergeben sich aus den Ansprüchen und der nachfolgenden Beschreibung anhand von Figuren.

Es zeigen:
- Fig. 1: eine beispielsgemäße Bremsanlage zur Durchführung eines erfindungsgemäßen Verfahrens,
- Fig. 2: einen ersten beispielhaften zeitlichen Verlauf verschiedener Größen während eines beispielsgemäßen Verfahrens zum Betrieb einer Bremsanlage, und
- Fig. 3: einen zweiten beispielhaften zeitlichen Verlauf verschiedener Größen während eines beispielsgemäßen Verfahrens zum Betrieb einer Bremsanlage.

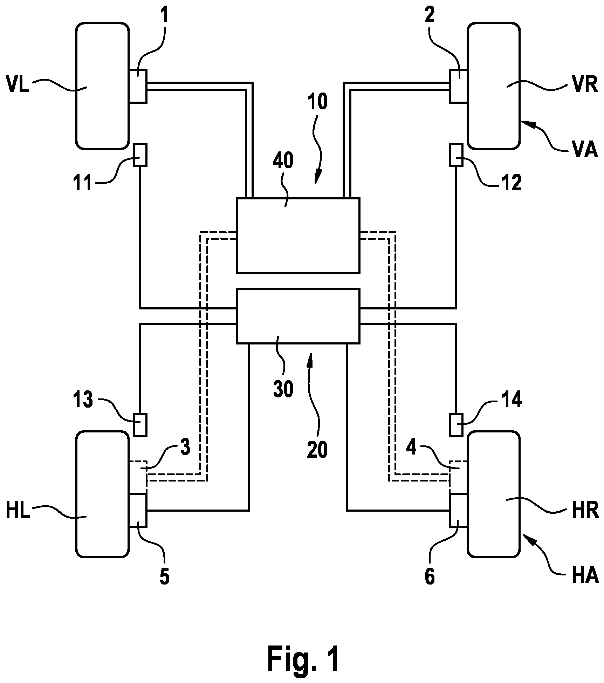

In Fig. 1 ist eine beispielsgemäße Bremsanlage eines Kraftfahrzeugs zur Durchführung eines erfindungsgemäßen Verfahrens stark schematisch dargestellt. Das Kraftfahrzeug umfasst eine Vorderachse VA mit einem linken Vorderrad VL und einem rechten Vorderrad VR und eine Hinterachse HA mit einem linken Hinterrad HL und einem rechten Hinterrad HR. Die Bremsanlage umfasst eine hydraulische Betriebsbremsvorrichtung 10 sowie eine elektrische Parkbremsvorrichtung 20. Je Rad VR, VL, HR, HL ist ein Raddrehzahlsensor 11, 12, 13, 14 vorgesehen, welcher die Raddrehgeschwindigkeit des entsprechenden Rades oder eine andere die Raddrehgeschwindigkeit repräsentierende Größe erfasst. Radindividuelle Raddrehzahlsensoren sind in üblichen Bremsanlagen mit Antiblockierregelfunktion vorhanden.

Betriebsbremsvorrichtung 10 umfasst hydraulisch betätigbare Radbremsen zumindest für die Vorderachse VA. Beispielsgemäß ist eine hydraulisch betätigbare Radbremse 1 für das linke Vorderrad VL und eine hydraulisch betätigbare Radbremse 2 für das rechte Vorderrad VR vorgesehen. Optional kann eine hydraulisch betätigbare Radbremse 3 für das linke Hinterrad HL und eine hydraulisch betätigbare Radbremse 4 für das rechte Hinterrad HR vorgesehen sein, was durch die gestrichelten Verbindungen angedeutet ist. Betriebsbremsvorrichtung 10 umfasst weiterhin eine hydraulische Steuer- und Regeleinheit 40, welche z.B. einen bremspedalbetätigbaren Hauptbremszylinder, eine elektrisch steurbare Druckquelle für eine "Brake-by-wire"-Betriebsart, ein mit dem Hauptbremszylinder zusammenwirkende Simulationseinrichtung zur Erzeugung eines Bremspedalgefühls in der "Brake-by-wire"-Betriebsart, und elektrisch betätigbare Ventile, z.B. Druckregelventile zum Einstellen von Radbremsdrücken an den Radbremsen 1-4, umfassen kann.

Parkbremsvorrichtung 20 umfasst elektrisch betätigbare Radbremsen für die Hinterachse HA. Beispielsgemäß ist eine Radbremse 5 für das linken Hinterrad HL und eine Radbremse 6 für das rechte Hinterrad HR vorgesehen. Jede der elektrisch betätigbaren Radbremsen umfasst einen nicht näher dargestellten elektromechanischen Aktuator, durch welche sie betätigt wird.

Die Radbremsen 5, 6 der Parkbremsvorrichtung 20 können auch mit den hydraulischen Radbremsen 3, 4 der Hinterachse der Betriebsbremsvorrichtung in einer Einheit kombiniert sein, z.B. sog. elektromechanisch angetriebene Kombi-Bremssättel. An sich sind elektrische Parkbremsen (EPBs) bekannt, die auf die Betriebsbremse wirken, um eine geeignet Bremswirkung, insbesondere für die Parkbremsfunktion, zu erzeugen. Bei einem elektromechanisch angetriebenen Kombi-Bremssattel wird beispielsweise durch einen Elektromotor über ein primäres Getriebe (meist ein Rotations-Rotations-Getriebe) ein Rotations-Translations-Getriebe (z.B. ein Spindelantrieb oder Kugelgewindetrieb) angetrieben, welches eine Axialkraft auf den Bremskolben im Bremssattel ausübt. Mit dieser Kraft auf den Bremskolben werden die Bremsbeläge des Bremssattels an die Bremsscheibe gedrückt und erzeugen somit eine Spannkraft.

Weiterhin umfasst die Bremsanlage eine elektronische Steuer- und Regeleinheit 30. Diese dient zur Ansteuerung der elektrisch ansteuerbaren Komponenten der hydraulischen Betriebsbremsvorrichtung 10 und der Parkbremsvorrichtung 20. Beispielsgemäß werden der elektronischen Steuer- und Regeleinheit 30 die Signale der Raddrehzahlsensoren 11, 12, 13, 14 zugeführt und in der elektronischen Steuer- und Regeleinheit 30 zur Durchführung eines erfindungsgemäßen Verfahrens ausgewertet.

Beispielsgemäß wird während einer Fahrt des Kraftfahrzeugs zeitlich parallel zu einer Bremsung mittels der hydraulischen Betriebsbremsvorrichtung 10 an zumindest der Vorderachse VA, eine Bremsung mittels der Parkbremsvorrichtung 20 an der Hinterachse durchgeführt. Dabei wird die Bremsung mittels der Parkbremsvorrichtung 10 an den Hinterachs-Radbremsen 5, 6 jeweils in Abhängigkeit von der Differenz aus einer Ist-Radgeschwindigkeit (oder Ist-Raddrehzahl) und einer Soll-Radgeschwindigkeit (oder Soll-Raddrehzahl) eines Hinterrads durchgeführt, wobei die Soll-Radgeschwindigkeit des Hinterrades aus der (z.B. mittels eines Raddrehzahlsensors gemessenen) Ist-Radgeschwindigkeit des seitenweise zugehörigen Vorderrades ermittelt wird.

Das beispielsgemäße Betriebsverfahren für die elektrischen Parkbremsen (EPB) 5, 6 während einer dynamischen Bremsung ist dafür geeignet, parallel zu einer ebenfalls gebremsten Vorderachse VA genutzt zu werden. Dies ermöglicht die Nutzung der EPBs 5, 6, um beispielsweise parallel zu einer hydraulisch gebremsten Vorderachse VA eine Bremsung der Hinterachse HA zu realisieren.

Ebenfalls ist das beispielsgemäße Betriebsverfahren für elektrische Parkbremsen 5, 6 geeignet, um eine hydraulische Bremsung, die auf beide Achsen VA, HA (Vorder- und Hinterachse) wirkt, zu unterstützen. Dies wird beispielsweise genutzt, um eine unverstärkte, fahrerbetätigte Bremsung mittels der hydraulischen Betriebsbremsvorrichtung 10 zu unterstützen und somit die gesamte Bremswirkung bei gleicher Betätigungsarbeit des Fahrers zu erhöhen.

Um parallel zu einer hydraulisch gebremsten Vorderachse eine Bremsung der Hinterachse zu realisieren, arbeitet das Betriebsverfahren beispielsgemäß mit einer geeigneten Auswertung der Raddrehzahlinformationen und einer geeigneten Ansteuerung der EPB-Aktuatoren. Dies ermöglicht vorteilhafterweise eine im zeitlichen Mittel analoge und stufenlose Erzeugung einer Hinterachsbremskraft mit Hilfe der elektrischen Parkbremsaktuatoren.

Das Verfahren bietet den Vorteil, dass es mit an sich bekannten elektrischen Parkbremsen durchführbar ist. An sich bekannte elektromechanische EPB-Aktuatoren haben üblicherweise keine Sensorik, wie beispielsweise Kraft-, Weg- oder Winkelsensoren, da dies für einen Betrieb als elektrische Feststellbremse im Stand, für den diese Aktuatoren konzipiert sind, ausreichend ist. Für eine Nutzung elektrischer Parkbremsaktuatoren während der Fahrt wäre eine Erfassung der aktuellen Bremskraft bzw. Spannkraft erforderlich, wenn die Bremswirkung per Stellsignal analog (im Sinne von stufenlos) und reproduzierbar einstellbar sein soll. Aus Kostengründen wird dies jedoch nicht umgesetzt. Um eine Nutzung der EPB-Aktuatoren für eine dynamische Bremsung während der Fahrt zu ermöglichen, werden die üblicherweise im Fahrzeug bereits zur Verfügung stehenden Raddrehzahlinformationen genutzt.

Ein beispielsgemäßes Verfahren zum Betrieb einer Bremsanlage mit einer hydraulischen Betriebsbremsvorrichtung 10 mit hydraulisch betätigbaren Radbremsen 1, 2 an zumindest der Vorderachse VA und einer Parkbremsvorrichtung 20 mit jeweils durch einen elektromechanischen Aktuator betätigbaren Radbremsen 5, 6 an der Hinterachse HA wird folgendermaßen durchgeführt:
Wenn die Vorderachse VA hydraulisch gebremst wird, entsteht an der Vorderachse VA ein entsprechender Radschlupf. Solange keine Antiblockierregelung vorliegt, befindet sich der Radschlupf jedoch noch im stabilen Radschlupfbereich. Beispielsgemäß werden die Radgeschwindigkeiten der Hinterräder HL, HR mit Hilfe einer Abbremsung durch die EPB-Aktuatoren 5, 6 auf Soll-Raddrehzahlen eingeregelt, die aus den gemessenen Ist-Vorderraddrehzahlen berechnet werden. Hierzu wird seitenweise die Raddrehzahlinformation betrachtet. D.h. zur Regelung der Bremswirkung des linken Hinterrades HL wird dessen Raddrehzahlinformation im Verhältnis zur Raddrehzahlinformation des linken Vorderrades VL eingeregelt. Entsprechend geschieht dies auch auf der rechten Seite.

Basis für eine Soll-Hinterraddrehzahl ist die Raddrehzahl des Vorderrads der gleichen Fahrzeugseite. Von dieser Raddrehzahlbasis wird ein Soll-Schlupfwert subtrahiert. Als Soll-Schlupfwert für das Hinterrad kann ein mit einem vorgewählten Proportionalitätsfaktor skalierter Ist-Schlupfwert des seitengleichen Vorderrads verwendet werden. Der Ist-Schlupfwert kann das Ergebnis einer Radschlupfschätzung der ABS-Regelalgorithmen sein. Wenn die Differenz aus Ist- und Soll-Schlupfwert einen oberen Schwellenwert überschreitet oder einen unteren Schwellenwert unterschreitet, erfolgt ein gegensteuernder Eingriff - im Falle der EPBs eine Umkehrung der Aktuatorbestromung.

Die Soll-Hinterraddrehzahl ist also gleich der (seitengleichen) Ist-Vorderraddrehzahl minus dem Soll-Schlupf.

Vorzugsweise entsprechen die Schwellen +0,5 km/h und -0,5 km/h.

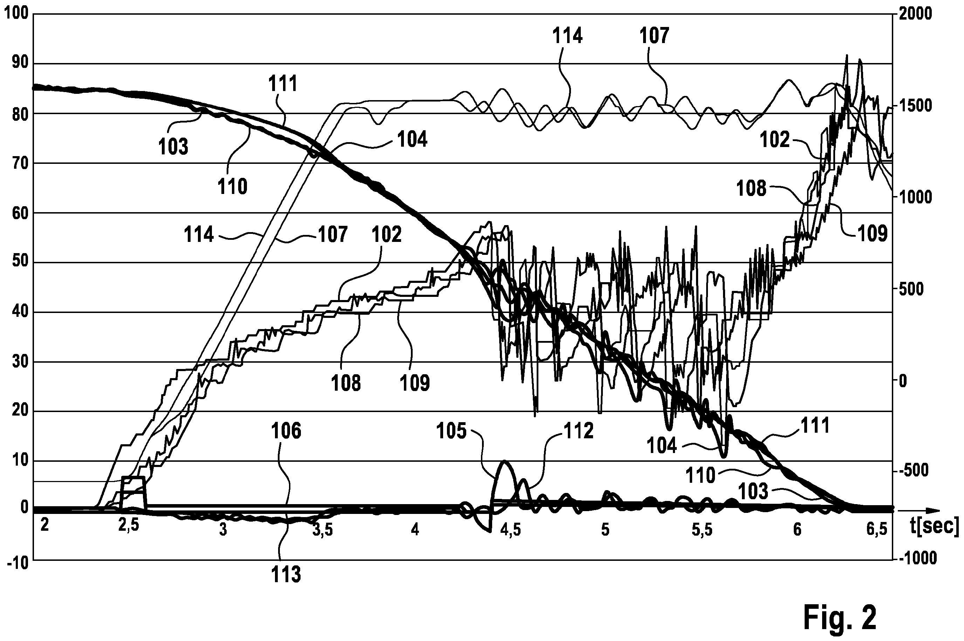

In Fig. 2 ist ein erster beispielhafter zeitlicher Verlauf verschiedener Größen während eines beispielsgemäßen Verfahrens zum Betrieb einer Bremsanlage dargestellt. Fig. 2 stellt eine Bremsung bis in eine Antiblockierregelung dar.

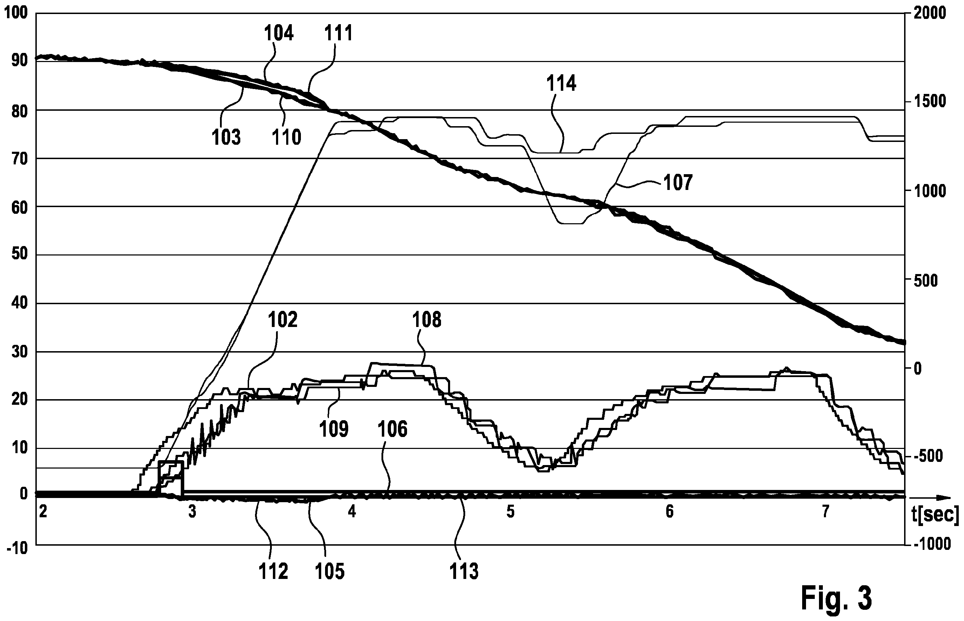

In Fig. 3 ist ein zweiter beispielhafter zeitlicher Verlauf verschiedener Größen während eines beispielsgemäßen Verfahrens zum Betrieb einer Bremsanlage dargestellt. Fig. 3 stellt eine Bremsung bei langsamem auf- und abwärts Modulieren des Solldrucks bzw. der Bremsvorgabe dar.

In den Fig. 2 und 3 sind die folgenden Größen in Abhängigkeit der Zeit t in Sekunden (sec) dargestellt: Radsolldruck des linken Vorderrades VL in bar (Linie 101, liegt in den Fig. unter Linie 102), Radsolldruck des rechten Vorderrades VR in bar (Linie 102), Raddruck des linken Vorderrades VL in bar (Linie 108), Raddruck des rechten Vorderrades VR in bar (Linie 109), Radgeschwindigkeit des linken Vorderrad VL in km/h (Linie 103), Radgeschwindigkeit des linken Hinterrades HL in km/h (Linie 104), Radgeschwindigkeit des rechten Vorderrades VR in km/h (Linie 110), Radgeschwindigkeit des rechten Hinterrades HR in km/h (Linie 111), Schlupf des linken Hinterrades HL in km/h (Linie 105), Schlupf des rechten Hinterrades HR in km/h (Linie 112), obere Schlupfschwelle in km/h (Linie 106), untere Schlupfschwelle in km/h (Linie 113), Signal entsprechend dem Auf-/Zuspannweg (der Betätigung) des EPB-Aktuators 5 des linken Hinterrades HL in µm (Linie 107), Signal entsprechend dem Auf-/Zuspannweg (der Betätigung) des EPB-Aktuators 6 des rechten Hinterrades HR in µm (Linie 114).

Wie aus Fig. 2 ersichtlich wird, werden die Hinterradgeschwindigkeiten 104, 111 durch das beispielsgemäße Verfahren auf die entsprechende Vorderradgeschwindigkeit 103, 110 herunter gezogen (ca. t = 2,7 sec bis ca. t = 3,5 sec), sobald die EPB-Aktuatoren 5, 6 das Lüftspiel überwunden haben und sich eine Spannkraft aufbaut. Ab etwa t = 3,5 sec bis etwa t = 4,2 sec verlaufen die Hinterradgeschwindigkeiten 104, 111 in etwa gleich den Vorderradgeschwindigkeiten 103, 110.

Beispielsgemäß werden die Hinterradgeschwindigkeiten mit Hilfe der oberen Schwelle 106 von +0,5 km/h und der unteren Schwelle 113 von -0,5 km/h mit den Vorderradgeschwindigkeiten 103, 110 mitgeführt.

Bei einer Bremsung der Vorderachse VA gehen die Vorderräder VL, VR entsprechend der aufgebrachten Spannkraft der hydraulischen Vorderradbremsen 1, 2 in den Schlupf gegenüber der realen Fahrzeuggeschwindigkeit über Grund. Die beispielsgemäße Regelung der Hinterradgeschwindigkeiten 104, 111 durch Auswertung der Raddrehzahlinformationen der Vorder- und Hinterräder (insbesondere Vorder- und Hinterrad je Fahrzeugseite) führt zielgemäß dazu, dass die Hinterräder gleichermaßen in Schlupf laufen wie die Vorderräder (bzw. jedes Hinterrad gleichermaßen in Schlupf läuft wie das entsprechende seitweise Vorderrad) und somit entsteht eine Bremswirkung an den Hinterrädern HL, HR, deren Verhältnis zur Bremswirkung der Vorderräder VL, VR der idealen Bremskraftverteilung entspricht.

Bevor es zur Antiblockierregelung kommt (bei ca. t = 4,4 sec) befinden sich die Vorder- und Hinterräder im stabilen Radschlupfbereich.

Sobald aufgrund einer Bremsvorgabe (z.B. durch den Fahrer), die zur Überschreitung des stabilen Radschlupfbereichs führt, eine Antiblockierregelung (insbesondere an der Vorderache VA) notwendig wird, werden beispielsgemäß die Schlupfschwellen und/oder die Raddrehzahlauswertung für das Betriebsverfahren verändert. Die Schlupfschwellen und/oder die Raddrehzahlauswertung werden bevorzugt derart geändert, dass die Hinterachse auch während einer Antiblockierregelung der Vorderachse VA selbst eine stabile und hohe Bremswirkung erzeugt.

Die Raddrehzahlauswertung betrachtet in diesem Fall vorteilhafterweise eine Fahrzeugreferenzgeschwindigkeit, die auf Basis aller vier Radgeschwindigkeitsinformationen (103, 104, 110, 111) berechnet wird. Dies ist während einer Antiblockierregelung vorteilhaft, da hierbei die Vorderräder VL, VR immer wieder in den instabilen Radschlupfbereich kommen und somit diese Radgeschwindigkeiten 103, 110 stark schwanken bzw. zyklisch tiefer im Schlupf laufen entsprechend der Radbrems-Spannkraft-Modulation.

Außerdem werden während einer Antiblockierregelung beispielsgemäß die Schlupfschwellen (106, 113) für die Hinterräder gegenüber des Zustands einer Bremsung im stabilen Radschlupfbereich verändert. Die Schlupfschwellen werden hierbei beide auf einen positiven Wert gesetzt anteilig zur Fahrzeugreferenzgeschwindigkeit. Vorzugsweise betragen diese Schwellen dann ca. 3-6% der berechneten Fahrzeugreferenzgeschwindigkeit. Die Veränderung der Schlupfschwellen während einer Antiblockierregelung führt vorteilhafterweise dazu, dass die Hinterachse auch während einer Antiblockierregelung der Vorderachse selbst eine stabile und hohe Bremswirkung erzeugt, nahe am Limit der Radschlupfstabilität.

Wie aus Fig. 3 ersichtlich wird, werden die Hinterradgeschwindigkeiten 104, 111 durch das beispielsgemäße Verfahren auf die entsprechende Vorderradgeschwindigkeit 103, 110 herunter gezogen, sobald die EPB-Aktuatoren das Lüftspiel überwunden haben, ca. bei t = 3,8 sec, und sich eine Spannkraft aufbaut.

Beispielsgemäß werden die Hinterradgeschwindigkeiten mit Hilfe der Schwellen 106, 113 von +0,5 km/h und -0,5 km/h mit den Vorderradgeschwindigkeiten mitgeführt.

Etwa zwischen t = 4 sec und t = 6 sec kann der Fig. 3 entnommen werden, wie durch das beispielsgemäße Betriebsverfahren wunschgemäß entsprechend der Bremsvorgabe (welche durch die Radsolldrücke 101, 102 wiedergespiegelt wird) die Radbremsen 5, 6 an den Hinterrädern die Spannkraft bzw. Bremskraft (proportional zu den Vorderrädern) nachregeln. Dies ist gut erkennbar an den Radgeschwindigkeiten der Hinterräder 104, 111 im Vergleich zu den Radgeschwindigkeiten der Vorderräder 103, 110. An den Signalen 107, 114 des Auf-/Zuspannwegs der EPB-Aktuatoren 5, 6 der Hinterräder sieht man wie die EPB-Aktuatoren auf- bzw. zuspannen, um die gewünschte Bremskraft einzustellen. Bevorzugt wird ein erfindungsgemäßes Betriebsverfahren auch für den Fall genutzt, dass beide Fahrzeugachsen bereits hydraulisch gebremst sind. So kann beispielsweise eine unverstärkte hydraulische fahrerbetätigte Bremsung unterstützt und somit die gesamte Bremswirkung bei gleicher Betätigungsarbeit des Fahrers erhöht werden.

Mit dem beispielsgemäßen Betriebsverfahren für elektrische Parkbremsen während einer dynamischen Bremsung ist eine Unterstützung bzw. parallele Nutzung zu einer hydraulischen Bremsung während der Fahrt möglich. Hierbei wird vorteilhafterweise die Fahrzeugstabilität erhalten durch geeignete Regelung der elektrischen Parkbremsaktuatoren auf Basis der Raddrehzahlinformationen.

Die beispielsgemäße Regelung der Hinterradgeschwindigkeiten durch die oben näher erläuterte Auswertung der Raddrehzahlinformationen der Vorder- und Hinterräder führt vorteilhafterweise dazu, dass die Hinterräder gleichermaßen in Schlupf laufen wie die Vorderräder. Somit entsteht vorteilhafterweise ein Schlupf der Hinterräder proportional zu dem der Vorderräder.

## Patentansprüche

1. Verfahren zum Betrieb einer Bremsanlage eines Kraftfahrzeugs mit einer hydraulischen Betriebsbremsvorrichtung (10) mit hydraulisch betätigbaren Radbremsen (1, 2, 3, 4) an zumindest einer Vorderachse (VA) des Kraftfahrzeugs, einer Parkbremsvorrichtung (20) mit jeweils durch einen elektromechanischen Aktuator betätigbaren Radbremsen (5, 6) an einer Hinterachse (HA) des Kraftfahrzeugs und Raddrehzahlsensoren (11, 12, 13, 14) an den Rädern (VR, VL, HR, HL) der Vorder- und Hinterachse, wobei während einer Bremsung mittels der hydraulischen Betriebsbremsvorrichtung (10) während einer Fahrt des Kraftfahrzeugs eine Bremsung mittels der Parkbremsvorrichtung (20) durchgeführt wird, **dadurch gekennzeichnet, dass** die Bremsung mittels der Parkbremsvorrichtung (20) basierend auf einer Auswertung oder Vergleich der Raddrehzahlinformationen der seitengleichen Räder (VR, HR; HL, VL) der Vorder- und Hinterachse durchgeführt wird.

2. Verfahren nach Anspruch 1, **dadurch gekennzeichnet, dass** die Parkbremsvorrichtung derart angesteuert oder geregelt wird, dass der Schlupf zumindest eines, insbesondere jedes, der Räder der Hinterachse im wesentlichen proportional zu dem Schlupf des seitenweise zugehörigen Rades der Vorderachse eingestellt wird.

3. Verfahren nach Anspruch 1 oder 2, **dadurch gekennzeichnet, dass** die Parkbremsvorrichtung derart angesteuert oder geregelt wird, dass die Radgeschwindigkeit eines, insbesondere jedes, der Räder der Hinterachse mit der Radgeschwindigkeit des seitenweise zugehörigen Rades der Vorderachse mitgeführt wird.

4. Verfahren nach einem der Ansprüche 1 bis 3, **dadurch gekennzeichnet, dass** die Parkbremsvorrichtung derart angesteuert oder geregelt wird, dass die Radgeschwindigkeit eines, insbesondere jedes, der Räder der Hinterachse innerhalb eines vorgegebenen Geschwindigkeitsbereichs mit der Radgeschwindigkeit des seitenweise zugehörigen Rades der Vorderachse mitgeführt wird.

5. Verfahren nach Anspruch 4, **dadurch gekennzeichnet, dass** der vorgegebene Geschwindigkeitsbereich mit einer vorgegebenen Breite um die Radgeschwindigkeit des seitenweise zugehörigen Rades liegt.

6. Verfahren nach einem der Ansprüche 1 bis 5, **dadurch gekennzeichnet, dass** eine Soll-Radgeschwindigkeit für eines, insbesondere jedes, der Räder der Hinterachse vorgegeben, und insbesondere eingestellt, wird, welche gleich einer gemessenen Radgeschwindigkeit des seitenweise zugehörigen Rades der Vorderachse abzüglich eines Soll-Schlupfwertes ist.

7. Verfahren nach Anspruch 6, **dadurch gekennzeichnet, dass** der Soll-Schlupfwert gleich einem Ist-Schlupfwert des seitengleichen Vorderrads multipliziert mit einem vorgegebenen Skalierungsfaktor gewählt wird.

8. Verfahren nach einem der Ansprüche 1 bis 7, **dadurch gekennzeichnet, dass** dieses durchgeführt wird, wenn keine Antiblockierregelung an der Vorderachse (VA) vorliegt.

9. Verfahren nach einem der Ansprüche 1 bis 8, **dadurch gekennzeichnet, dass** die Bremsung eines, insbesondere jedes, der Räder der Hinterachse (HA) mittels der Parkbremsvorrichtung (20) anhand einer Fahrzeugreferenzgeschwindigkeit (REF) durchgeführt wird, welche aus den Raddrehzahlinformationen aller Räder von Vorder- und Hinterachse bestimmt wird, insbesondere ausschließlich, wenn eine Antiblockierregelung an der Vorderachse vorliegt.

10. Verfahren nach Anspruch 9, **dadurch gekennzeichnet, dass** im Falle einer Antiblockierregelung an der Vorderachse die Schlupfschwellen für eine Antiblockierregelung an der Hinterachse auf einen positiven Wert anteilig zur Fahrzeugreferenzgeschwindigkeit (REF), insbesondere auf einen Wert von ca. 3% bis 6% der Fahrzeugreferenzgeschwindigkeit, gesetzt werden.

11. Bremsanlage für ein Kraftfahrzeug mit einer hydraulischen Betriebsbremsvorrichtung (10) mit hydraulisch betätigbaren Radbremsen (1, 2, 3, 4) an zumindest einer Vorderachse (VA), einer Parkbremsvorrichtung (20) mit jeweils durch einen elektromechanischen Aktuator betätigbaren Radbremsen (5, 6) an einer Hinterachse (HA), Raddrehzahlsensoren (11, 12, 13, 14) an den Rädern (VR, VL, HR, HL) der Vorder- und Hinterachse und einer elektronischen Steuer- und Regeleinheit (30), **dadurch gekennzeichnet, dass** in der elektronischen Steuer- und Regeleinheit ein Verfahren nach einem der Ansprüche 1 bis 10 durchgeführt wird.

## Claims

1. Method for the operation of a brake system of a motor vehicle with a hydraulic service brake apparatus (10) with hydraulically actuable wheel brakes (1, 2, 3, 4) on at least one front axle (VA) of the motor vehicle, a parking brake apparatus (20) with wheel brakes (5, 6) which can be actuated in each case by way of an electromechanical actuator on a rear axle (HA) of the motor vehicle, and wheel rotational speed sensors (11, 12, 13, 14) on the wheels (VR, VL, HR, HL) of the front and rear axle, a brake operation by means of the parking brake apparatus (20) being carried out during a brake operation by means of the hydraulic service brake apparatus (10) during driving of the motor vehicle, **characterized in that** the brake operation by means of the parking brake apparatus (20) is carried out in a manner which is based on an evaluation or comparison of the wheel rotational speed information items of the wheels on the same side (VR, HR; HL, VL) of the front and rear axle.

2. Method according to Claim 1, **characterized in that** the parking brake apparatus is actuated or regulated in such a way that the slip of at least one (in particular, each one) of the wheels of the rear axle is set in a substantially proportional manner with respect to the slip of the associated wheel on the same side of the front axle.

3. Method according to Claim 1 or 2, **characterized in that** the parking brake apparatus is actuated or regulated in such a way that the wheel speed of one (in particular, each one) of the wheels of the rear axle is synchronous with the wheel speed of the associated wheel on the same side of the front axle.

4. Method according to one of Claims 1 to 3, **characterized in that** the parking brake apparatus is actuated or regulated in such a way that the wheel speed of one (in particular, each one) of the wheels of the rear axle is synchronous within a predefined speed range with the wheel speed of the associated wheel on the same side of the front axle.

5. Method according to Claim 4, **characterized in that** the predefined speed range lies with a predefined spectrum around the wheel speed of the associated wheel on the same side.

6. Method according to one of Claims 1 to 5, **characterized in that** a setpoint wheel speed for one (in particular, each one) of the wheels of the rear axle is predefined and, in particular, set, which setpoint wheel speed is equal to a measured wheel speed of the associated wheel on the same side of the front axle minus a setpoint slip value.

7. Method according to Claim 6, **characterized in that** the setpoint slip value is selected to be equal to an actual slip value of the front wheel on the same side multiplied by a predefined scaling factor.

8. Method according to one of Claims 1 to 7, **characterized in that** it is carried out when there is no anti-lock regulation operation at the front axle (VA).

9. Method according to one of Claims 1 to 8, **characterized in that** the brake operation of one (in particular, each one) of the wheels of the rear axle (HA) by means of the parking brake apparatus (20) is carried out on the basis of a vehicle reference speed (REF) which is defined from the wheel rotational speed information items of all the wheels of the front and rear axle, in particular exclusively when there is an anti-lock regulation operation at the front axle.

10. Method according to Claim 9, **characterized in that**, in the case of an anti-lock regulation operation at the front axle, the slip thresholds for an anti-lock regulation operation at the rear axle are set to a positive value proportionately with respect to the vehicle reference speed (REF), in particular to a value of approximately from 3% to 6% of the vehicle reference speed.

11. Brake system for a motor vehicle with a hydraulic service brake apparatus (10) with hydraulically actuable wheel brakes (1, 2, 3, 4) on at least one front axle (VA), a parking brake apparatus (20) with wheel brakes (5, 6) which can be actuated in each case by way of an electromechanical actuator on a rear axle (HA), wheel rotational speed sensors (11, 12, 13, 14) on the wheels (VR, VL, HR, HL) of the front and rear axle, and an electronic control and regulating unit (30), **characterized in that** a method according to one of Claims 1 to 10 is carried out in the electronic control and regulating unit.

## Revendications

1. Procédé d'exploitation d'une unité de frein d'un véhicule automobile comprenant un dispositif de frein de service hydraulique (10) pourvu de freins de roues (1, 2, 3, 4) à actionnement hydraulique sur au moins un essieu avant (VA) du véhicule automobile, un dispositif de frein de stationnement (20) pourvu de freins de roues (5, 6) respectivement actionnables par un actionneur électromécanique sur un essieu arrière (HA) du véhicule automobile, et des capteurs de vitesse de rotation de roue (11, 12, 13, 14) sur les roues (VR, VL, HR, HL) de l'essieu avant et de l'essieu arrière, lors d'un freinage au moyen du dispositif de frein de service hydraulique (10) pendant une marche du véhicule automobile, un freinage étant réalisé au moyen du dispositif de frein de stationnement (20), **caractérisé en ce que** le freinage est réalisé au moyen du dispositif de frein de stationnement (20) sur la base d'une évaluation ou comparaison des informations de vitesse de rotation de roue des roues situées du même côté (VR, HR ; HL, VL) de l'essieu avant et de l'essieu arrière.

2. Procédé selon la revendication 1, **caractérisé en ce que** le dispositif de frein de stationnement est contrôlé ou régulé de telle sorte que le glissement d'au moins une, notamment de chacune, des roues de l'essieu arrière soit ajusté essentiellement proportionnellement au glissement de la roue correspondante sur le côté de l'essieu avant.

3. Procédé selon la revendication 1 ou 2, **caractérisé en ce que** le dispositif de frein de stationnement est contrôlé ou régulé de telle sorte que la vitesse de roue d'une, notamment de chacune, des roues de l'essieu arrière soit entraînée avec la vitesse de roue de la roue correspondante sur le côté de l'essieu avant.

4. Procédé selon l'une quelconque des revendications 1 à 3, **caractérisé en ce que** le dispositif de frein de stationnement est contrôlé ou régulé de telle sorte que la vitesse de roue d'une, notamment de chacune, des roues de l'essieu arrière soit entraînée dans une plage de vitesse prédéterminée avec la vitesse de roue de la roue correspondante sur le côté de l'essieu avant.

5. Procédé selon la revendication 4, **caractérisé en ce que** la plage de vitesse prédéterminée se situe avec une amplitude prédéterminée autour de la vitesse de roue de la roue correspondante sur le côté.

6. Procédé selon l'une quelconque des revendications 1 à 5, **caractérisé en ce qu'**une vitesse de roue de consigne pour une, notamment chacune, des roues de l'essieu arrière est prédéterminée, et notamment ajustée, qui est identique à une vitesse de roue mesurée de la roue correspondante sur le côté de l'essieu avant moins une valeur de glissement de consigne.

7. Procédé selon la revendication 6, **caractérisé en ce que** la valeur de glissement de consigne est choisie égale à une valeur de glissement réel de la roue avant située du même côté multipliée par un facteur d'échelle prédéterminé.

8. Procédé selon l'une quelconque des revendications 1 à 7, **caractérisé en ce que** celui-ci est réalisé lorsqu'aucune régulation antiblocage n'est présente sur l'essieu avant (VA).

9. Procédé selon l'une quelconque des revendications 1 à 8, **caractérisé en ce que** le freinage d'une, notamment de chacune, des roues de l'essieu arrière (HA) est réalisé au moyen du dispositif de frein de stationnement (20) à l'aide d'une vitesse de référence de véhicule (REF), qui est déterminée à partir des informations de vitesse de rotation de roue de toutes les roues de l'essieu avant et de l'essieu arrière, notamment exclusivement lorsqu'une régulation antiblocage est présente sur l'essieu avant.

10. Procédé selon la revendication 9, **caractérisé en ce que,** dans le cas d'une régulation antiblocage sur l'essieu avant, les seuils de glissement pour une régulation antiblocage sur l'essieu arrière sont fixés à une valeur positive proportionnelle à la vitesse de référence de véhicule (REF), notamment à une valeur d'environ 3 % à 6 % de la vitesse de référence de véhicule.

11. Unité de frein pour un véhicule automobile comprenant un dispositif de frein de service hydraulique (10) pourvu de freins de roues (1, 2, 3, 4) à actionnement hydraulique sur au moins un essieu avant (VA), un dispositif de frein de stationnement (20) pourvu de freins de roues (5, 6) respectivement actionnables par un actionneur électromécanique sur un essieu arrière (HA), des capteurs de vitesse de rotation de roue (11, 12, 13, 14) sur les roues (VR, VL, HR, HL) de l'essieu avant et de l'essieu arrière, et une unité de contrôle et de régulation électronique (30), **caractérisée en ce qu'**un procédé selon l'une quelconque des revendications 1 à 10 est réalisé dans l'unité de contrôle et de régulation électronique.
